# EUROPÄISCHE PATENTANMELDUNG

(11) **EP 1 215 589 A2**
(43) Veröffentlichungstag der Anmeldung: **19.06.2002**
(21) Anmeldenummer: 01124900.0
(22) Anmeldetag: 18.10.2001
(51) Int. Cl.: G06F 17/30

(54) **Bereitstellung von Projektdaten in einem durch eine standardisierte Meta-Sprache definiertem Format**

(30) Priorität: 21.12.2000 DE 10064400; 18.12.2000 DE 10063059; 15.12.2000 DE 10062741; 23.05.2001 DE 10125383; 23.05.2001 DE 10125386; 06.08.2001 DE 10138533
(71) Anmelder: SIEMENS AKTIENGESELLSCHAFT, 80333 München (DE)
(72) Erfinder: Büssert, Jürgen, 91338 Igensdorf (DE); Wagner, Peter, 91217 Hersbruck (DE)

(57) **Zusammenfassung**

Bereitstellung von Projekt- und/oder Projektierungsdaten eines Automatisierungsprojekts in einem durch eine standardisierte Meta-Sprache, insbesondere XML, definiertem Format.

Die Erfindung betrifft eine Vorrichtung, ein Engineeringsystem und Verfahren zur Bereitstellung von Projekt- und/oder Projektierungsdaten eines Automatisierungsprojekts oder einer -komponente in einem durch eine standardisierte Meta-Sprache, insbesondere XML, definierten Format. Durch eine Konvertierung von Projekt- und/oder Projektierungsdaten mit proprietärem Format in Daten mit einem durch eine standardisierte Meta-Sprache, insbesondere XML, definierten Format und das Bereitstellen dieser Daten mit definiertem Format können externe Computerprogrammprodukte oder Tools, die auf Daten mit dem definiertem Format abbilden, diese Daten einlesen, analysieren, visualisieren und/oder bearbeiten, ohne dass die Projekt- und/oder Projektierungsdaten in ein für das jeweilige Computerprogrammprodukt oder Tool les- bzw. bearbeitbares Format umgewandelt werden müssten. Durch eine Konvertierung von Daten mit definiertem Format in solche mit proprietärem Format können durch externe Computerprogrammprodukte oder Tools erzeugte Daten dem Automatisierungsprojekt zur Verfügung gestellt werden. Dadurch kann die Erstellung und Abänderung von Steuerprogrammen erheblich erleichtert und beschleunigt werden.

## Beschreibung

Bereitstellung von Projekt- und/oder Projektierungsdaten eines Automatisierungsprojekts in einem durch eine standardisierte Meta-Sprache, insbesondere XML, definiertem Format.

Die vorliegende Erfindung betrifft eine Vorrichtung zur Bereitstellung von Projekt- und/oder Projektierungsdaten eines Automatisierungsprojekts in einem durch eine standardisierte Meta-Sprache, insbesondere XML, definierten Format. Des weiteren betrifft die vorliegende Erfindung ein entsprechendes Engineeringsystem sowie entsprechende Verfahren zum Bereitstellen von Projekt- und/oder Projektierungsdaten.

Programmierbare Steuersysteme enthalten in der Regel ein sogenanntes Runtimesystem zur zeitlichen Ablaufsteuerung von Automatisierungskomponenten, einer Maschine oder eines Systems sowie ein sogenanntes Engineeringsystem zum Editieren, Erstellen und/oder Verändern von Steuerprogrammen. Die in und mit dem Engineeringsystem entwickelten Projekt- und/oder Projektierungsdaten mit proprietärem Format werden in das Runtimesystem überspielt und dort zur Ausgabe der Steuergrößen verwendet.

Bei zunehmender Komplexität der programmierbaren Steuersysteme bzw. der Automatisierungskomponenten sowie mit zunehmender Komplexität der von diesen Systemen und Komponenten zu erfüllenden Aufgaben, werden auch immer komplexere Steuerprogramme benötigt. Eine der Möglichkeiten, diesen steigenden Anforderungen zu begegnen, läge darin, die Funktionalität der bisherigen Engineeringsysteme weiter zu erhöhen. Dies hat jedoch den Nachteil, dass die Engineeringsysteme selbst immer komplexer und damit aufwendiger in ihrer Programmierung und Weiterentwicklung werden.

Die Aufgabe der vorliegenden Erfindung besteht somit darin, die Entwicklung von Steuerprogrammen ohne die erwähnten Nachteile zu erleichtern und zu verbessern.

Erfindungsgemäß wird diese Aufgabe gelöst durch eine Vorrichtung zur Bereitstellung von Projekt- und/oder Projektierungsdaten eines Automatisierungsprojekts, welche eine Konvertierungseinrichtung zum Konvertieren von Projekt- und/oder Projektierungsdaten mit proprietärem Format in Daten mit einem durch eine standardisierte Meta-Sprache, insbesondere XML, definierten Format und zum Zurückkonvertieren von Daten mit einem durch eine standardisierte Meta-Sprache, insbesondere XML, definierten Format in Projekt- und/oder Projektierungsdaten mit proprietärem Format und zum Bereitstellen der Daten mit definiertem Format zur Weiterverarbeitung enthält.

Darüber hinaus lässt sich die genannte Aufgabe durch ein entsprechendes Engineeringsystem und entsprechende Verfahren lösen.

Vorteilhafte Weiterbildungen der erfindungsgemäßen Vorrichtung und des erfindungsgemäßen Verfahrens sind Gegenstand der Unteransprüche.

Ein besonderer Vorteil der erfindungsgemäßen Vorrichtung, des erfindungsgemäßen Engineeringsystems und der erfindungsgemäßen Verfahren liegt darin, dass durch die Konvertierung von Projekt- und/oder Projektierungsdaten eines Automatisierungsprojekts mit einem proprietären Format in Daten mit einem durch eine standardisierte Meta-Sprache, insbesondere XML, definierten Format und das Bereitstellen dieser Daten mit definiertem Format erstmals externe Computerprogrammprodukte oder Tools, die auf die so erzeugten Daten mit definiertem Format abbilden, diese Daten einlesen, analysieren, visualisieren und/oder bearbeiten können, ohne dass für jedes Computerprogrammprodukt oder Tool die Projekt- und/oder Projektierungsdaten in ein für das Computerprogrammprodukt oder Tool les- bzw. bearbeitbares Format umgewandelt werden müssten. Durch eine Konvertierung von Daten mit definiertem Format in solche mit proprietärem Format können durch externe Computerprogrammprodukte oder Tools erzeugte Daten dem Automatisierungsprojekt zur Verfügung gestellt werden. Mittels der Erfindung kann die Erstellung und Abänderung von Steuerprogrammen erheblich erleichtert und beschleunigt werden.

Der Begriff "Metasprache" steht für die Definition oder Beschreibung einer Sprache. Die Metasprache beschreibt die Regeln zur Erzeugung einer Sprache. Die "Standard Generalized Markup Language" (SGML) zum Beispiel wird als Metasprache bezeichnet, weil sie eine Sprache zur Beschreibung von Sprachen darstellt. Sie legt die Regeln darüber fest, wie ein Dokument in seiner logischen Struktur (Überschriften, Absätzen, inhaltlichen Einheiten usw.) beschrieben werden kann. XML (extensibel markup language) ist als Untermenge von SGML ebenfalls eine Metasprache für das Definieren von Dokumenttypen. Mit einer Metasprache, wie beispielsweise SGML und XML ist es möglich, Dokumente zu erstellen, die alle den gleichen Grundmustern im Aufbau folgen.

Allein zur Vereinfachung der Darstellung und Erläuterung der Erfindung wird diese im nachfolgenden anhand von XML beschrieben.

Ein wesentlicher Vorteil von XML ist, dass eine strikte Trennung zwischen Inhalt, Darstellung und Struktur von Daten vorgenommen wird. Erreicht wird dies durch die Möglichkeit, in XML-Dateien Tags zu definieren, die wiederum Tags enthalten können. Dadurch kann eine XML-Datei einen Baum aufbauen, der zu einer strukturierten Trennung verschiedener Inhalte führt. Dadurch ist die Grundlage für eine maschinelle Bearbeitung der Datei gewährleistet.

Mit Hilfe von verschiedenen XSL-Dateien (XSL = extensible stylesheet language) kann ein XML-Dokument unterschiedliche Darstellungen annehmen. Für die Umwandlung von einem XML-Dokument in ein anderes dient XSLT (XSLT = extensible stylesheet language for transformations). Anwendungsgebiete für XSLT können die Umwandlung von XML-Dateien in HTML (hypertext markup language) oder XHTML (extensible hypertext markup language), aber auch in freie Formate sein.

Vorteilhafterweise verfügt die erfindungsgemäße Vorrichtung über eine Export/Import-Einrichtung zum Export/Import von Daten aus der Vorrichtung heraus und in sie hinein. Auf diese Weise ist auch ein direkter Export/Import der Daten in die und von den externen Softwareprogrammprodukte(n) oder Tools möglich, wodurch die Handhabung der Daten weiter vereinfacht wird.

Gemäß einer vorteilhaften Weiterentwicklung kann die erfindungsgemäße Vorrichtung eine Datenablageeinrichtung zum Ablegen der Daten mit definiertem Format aufweisen. Wenn die Daten mit definiertem Format in einer Datenablageeinrichtung abgelegt werden, müssen die Projekt- und/oder Projektierungsdaten nicht bei jedem Exportvorgang erneut in Daten mit definiertem Format umgewandelt werden. Mit Hilfe der Datenablageeinrichtung können somit die Daten mit dem durch die standardisierte Meta-Sprache definiertem Format für ein externes Softwareprogrammprodukt oder Tool ohne nennenswerte zeitliche Verzögerung zur Verfügung stehen bzw. gestellt werden.

Beispiele für Softwareprogrammprodukte bzw. Tools, die auf Daten abbilden können, die ein durch eine standardisierte Meta-Sprache, insbesondere XML, definiertes Format aufweisen, sind:
- Versionsverwaltungsprogramme, wie sie beispielsweise unter den Handelsnamen "ClearCase" oder "PVCS" erhältlich sind;
- CAD-, CAM-, CAE-Programme (CAD = computer aided design, CAM = computer aided manufacturing, CAE = computer aided engineering);
- Kurvenscheibenprogramme;
- Productivity tools, die Teile von Projekt- und/oder Projektierungsdaten generieren können;
- Projektdesign tools (Sizer), zum Unterstützen der Erzeugung oder Duplizierung von Projekt- und/oder Projektierungsdaten.

Über die Export/Import-Einrichtung der erfindungsgemäßen Vorrichtung bzw. des erfindungsgemäßen Engineeringsystems können die Projekt- und/oder Projektierungsdaten als Daten mit definiertem Format aus dem Automatisierungsprojekt exportiert und in die Softwareprogrammprodukte oder Tools eingelesen werden. Die Softwareprogrammprodukte oder Tools können dann diese Daten analysieren, auswerten, visualisieren und/oder bearbeiten. Es kann dabei vorgesehen sein, dass nur die Elemente von dem Softwareprogrammprodukt oder Tool analysiert, ausgewertet, visualisiert und/oder bearbeitet werden, die dem einlesenden Softwareprogrammprodukt bzw. dem Tool bekannt sind. Unbekannte Teile werden in diesem Falle von dem Softwareprogrammprodukt bzw. Tool ignoriert. Fehlen Daten in der Struktur, so können diese mit Standardinitialwerten belegt werden. Durch die mit Hilfe der standardisierten Meta-Sprachen, insbesondere XML, erzeugbaren Daten mit streng hierarchischer Struktur ist die Übernahme gleichgebliebener Inhalte eines Datensatzes auch über unterschiedliche Datenstrukturversionen möglich.

Die Softwareprogrammprodukte bzw. Tools, die die Projekt- und/oder Projektierungsdaten mit definiertem Format bearbeiten können, wie beispielsweise Kurvenscheibenprogramme, Projektdesignprogramme und Productivity Tools, können nach der Be- oder Verarbeitung der Daten mit definiertem Format die ge- bzw. veränderten Daten mit definiertem Format, insbesondere über die Export/Import-Einrichtung an das Automatisierungsprojekt zurückübertragen. Beim Import findet unter Verwendung der Konvertierungseinrichtung eine Konvertierung der Daten mit definiertem Format in Daten mit proprietärem Format statt.

Diese Daten können dann, gegebenenfalls nach einer weiteren Be- bzw. Verarbeitung, von dem Automatisierungsprojekt bzw. dem Engineeringsystem in einer für das Runtimesystem geeigneten Form auf dieses übertragen werden.

Aus Gründen der Praktikabilität kann vorteilhafterweise vorgesehen sein, dass die Konvertierungs- und die Export/Importeinrichtung als eine Einrichtung ausgeführt ist. In diesem Fall würde die Export-/Importeinrichtung gleichzeitig die Funktionalität der Konvertierungseinrichtung aufweisen bzw. wäre die Konvertierungseinrichtung gleichzeitig in der Lage, Daten aus dem Automatisierungsprojekt zu exportieren bzw. sie dorthin zu importieren.

Durch die vorliegende Erfindung ist es somit möglich, dass in einem Automatisierungsprojekt vorhandene Projekt- und/oder Projektierungsdaten mit proprietärem Format in Daten mit einem durch eine standardisierte Meta-Sprache, insbesondere XML, definierten Format umgewandelt, aus einem Automatisierungsprojekt exportiert, in Softwareprogrammprodukte oder Tools importiert, dort be- bzw. verarbeitet, die be- bzw. verarbeiteten Daten mit definiertem Format in das Automatisierungsprojekt zurückübertragen und in Daten mit proprietärem Format umgewandelt werden und so dem Automatisierungsprojekt bzw. Engineeringsystem als Projekt- bzw. Projektierungsdaten zur Verfügung stehen.

Gemäß einem weiteren erfindungsgemäßen Verfahren können Projekt- und/oder Projektierungsdaten eines Automatisierungsprojekts oder einer -komponente dadurch erzeugt werden, dass wenigstens ein Computerprogrammprodukt oder Tool Projekt- und/oder Projektierungsdaten erzeugt oder durch dieses erzeugt werden und diese Daten in einem durch eine standardisierte Meta-Sprache, insbesondere XML, definierten Format zur Weiterverarbeitung bereitgestellt werden. Die Daten mit definiertem Format können anschließend in ein Automatisierungsprojekt importiert und dort in ein proprietäres Datenformat umgewandelt werden.

Auf diese Weise kann erfindungsgemäß auch ein vollständiger Satz an Projekt- bzw. Projektierungsdaten für ein Automatisierungsprojekt über den Einsatz externer Computerprogrammprodukte oder Tools erstellt werden. Die dafür benötigten Daten werden dazu von dem mindestens einen externen Computerprogrammprodukt oder Tool als Daten mit definiertem Format erzeugt oder in derartige Daten umgewandelt und anschließend zur Weiterverarbeitung zur Verfügung gestellt. Nach oder bei einem Import der Daten mit definiertem Format in das Automatisierungsprojekt erfolgt dann die Konvertierung in Daten mit proprietärem Format.

Änderungen bzw. Verbesserungen an dem so erzeugten Satz an Projekt- und/oder Projektierungsdaten können dann z.B. durch mindestens eine Anwendung des ersten erfindungsgemäßen Verfahrens oder durch mindestens eine variierende Wiederholung des zweiten erfindungsgemäßen Verfahrens versucht werden bzw. erfolgen.

Die erfindungsgemäßen Verfahren können so oft angewandt werden, bis für das gegebene Automatisierungsprojekt ein optimaler Satz an Projekt- und/oder Projektierungsdaten erzeugt bzw. gefunden worden ist.

Ein weiterer Vorteil der vorliegenden Erfindung liegt darin, dass auf Basis der geschilderten Mechanismen z.B. Änderungen von Projekt- und/oder Projektierungsdaten durch Vergleich mit früher oder später erstellten Projekt- und/oder Projektierungsdaten sehr einfach erkannt und ausgewertet werden können, wenn diese Daten jeweils mit einem durch eine standardisierte Meta-Sprache, insbesondere XML, definierten Format vorliegen. Mit Hilfe derart strukturierter Daten können Unterschiede zwischen verschiedenen Versionen von Projekt- und/oder Projektierungsdaten feinstgranular aufbereitet werden, was insbesondere für Verfahren und Prozesse, deren Ablauf genau festgelegt und nachvollziehbar sein muss, von Vorteil ist. So kann durch die vorliegende Erfindung z.B. den Vorschriften der US Food and Drug Administration (FDA) und der durch die FDA vorgeschriebenen "Change Control" erleichtert Rechnung getragen werden.

Noch ein weiterer Vorteil der Bereitstellung von Projekt- und/oder Projektierungsdaten ist, dass, wenn die Daten beispielsweise in XML-Format vorliegen, mit Hilfe von XSLT die Daten mit XML-Format in Dateien mit praktisch beliebigem Format konvertiert werden können. So ist es beispielsweise möglich, aus einer XML-Datei über XSLT-Anweisungen zumindest einen Teil der Daten in ein HTML-Dokument umzuwandeln. Ein derartiges HTML-Dokument kann dann z.B. mit einem der bekannten Browser betrachtet werden. Dazu kann das HTML-Dokument z.B. auch über das Internet mittels eines externen Computers lad- und darstellbar sein.

Neben der Visualisierung zumindest eines Teils der Projekt- und/oder Projektierungsdaten durch Umwandlung z.B. in HTML-Dateien, kann vorteilhafterweise mit Hilfe von XSLT aus den Daten mit XML-Format auch Dateien in jedem beliebigen Format generiert werden. Solche Dateien können dann z.B. von einem Softwareprogrammprodukt eingelesen und/oder verarbeitet werden, mit Hilfe dessen eine Dokumentation für ein Automatisierungsprojekt erstellt werden kann. Auch die Dokumentation der jeweils durchgeführten Änderungen in einem Automatisierungsprojekt wird durch die vorliegende Erfindung erleichtert.

Durch die vorliegende Erfindung ist es somit möglich, eine Vielzahl von externen Softwareprogrammprodukten oder Tools für die Entwicklung und Kontrolle von Steuerprogrammen einzusetzen, deren jeweilige Funktionalitäten nicht in das Engineeringsystem integriert zu werden brauchen. Durch die Möglichkeit des Einsatzes und der Einbindung von externen Softwareprogrammprodukten oder Tools für die Entwicklung und Kontrolle von Steuerprogrammen kann so einerseits vermieden werden, dass das Engineeringsystem mit Funktionalitäten "überfrachtet" wird, andererseits kann für jedes Automatisierungsprojekt auf die jeweils geeignetst erscheinenden Softwareprogrammprodukte oder Tools zurückgegriffen werden.

Die vorliegende Erfindung wird nun anhand der beigefügten Zeichnungen näher erläutert, in denen zeigen:
Fig. 1: ein Diagramm zur Veranschaulichung der Erfindung;
Fig. 2: eine Darstellung der Ordnerstruktur der exportierten Daten mit einem hier durch XML definierten Format.

Das folgende Ausführungsbeispiel dient nur zur näheren Erläuterung der vorliegenden Erfindung.

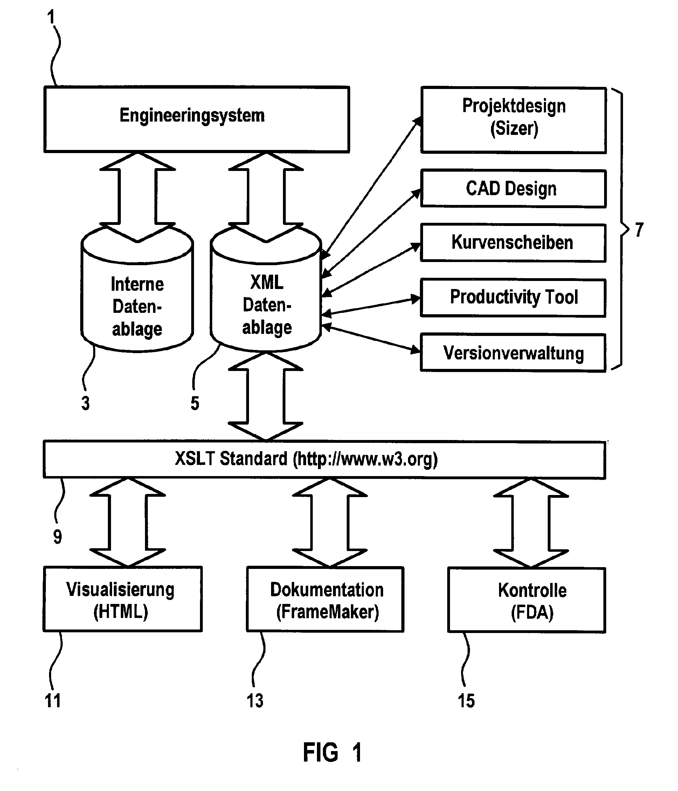

Fig. 1 stellt schematisch die Erfindung zur Bereitstellung von Projekt- und/oder Projektierungsdaten eines Engineeringsystems im XML-Format dar.

In einem Engineeringsystem 1 werden Projekt- und/oder Projektierungsdaten zum Steuern oder Regeln eines programmierbaren Steuersystems erzeugt. Diese Daten, die in einem proprietären Datenformat vorliegen, werden im vorliegenden Beispiel in einer internen Datenablage 3 abgelegt.

Das Engineeringsystem enthält weiter eine (hier nicht gezeigte) Konvertierungs- und Export-/Importeinrichtung. Aus Praktikabilitätsgründen kann vorgesehen sein, dass die Funktionalitäten beider Einrichtungen in einer einzigen Einrichtung realisiert sind. Durch diese Einrichtungen werden beim Export die Daten mit proprietärem Format in Daten mit XML-Format und beim Import die Daten mit XML-Format in Daten mit proprietärem Format umgewandelt. Diese Daten mit XML-Format werden bzw. sind im vorliegenden Beispiel in einer Datenablage 5 abgelegt.

Die Daten mit XML-Format können nun von Softwareprogrammprodukten oder Tools 7 eingelesen, ausgewertet und ver- bzw. bearbeitet werden, die auf XML abbilden. Mit Hilfe geeigneter Softwareprogrammprodukte oder Tools können so auch neue oder veränderte Daten mit XML-Format erzeugt werden. Diese Daten, z.B. ein Maschinenbild, können dann in Daten mit proprietärem Format umgewandelt und in das Engineeringsystem zurückgelesen werden und dort für die Entwicklung bzw. Verbesserung eines Steuerprogramms genutzt werden.

Im vorliegenden Beispiel werden die be- bzw. verarbeiteten Daten von den Softwareprogrammprodukten oder Tools in die Datenablage für die Daten mit XML-Format zurückgeschrieben bzw. werden von dem Engineeringsystem aus der Datenablage eingelesen. Es sind jedoch selbstverständlich andere Lösungen denkbar, bei denen der Import/Export der Daten auf andere Art und Weise bzw. über andere Einrichtungen erfolgt.

Mit Hilfe von XSLT-Anweisungen 9 ist es weiter möglich, die Daten mit XML-Format in Dateien mit einem praktisch beliebigen Format umzuwandeln. Diese Dateien, die dann z.B. HTML-Format oder ein proprietäres Format aufweisen können, können dann zur Visualisierung 11, z.B. mit Hilfe eines Browsers, zur Erstellung von technischen Dokumentationen 13 oder Erstellung von Dokumentationen zu Nachweis- und Kontrollzwecken 15 verwendet werden.

Die hier grafisch wiedergegebene Trennung zwischen den Softwareprogrammprodukten oder Tools 7 und den Visualisierungen 11 bzw. Dokumentationen 11 und 13 dient nur der Anschaulichkeit. Selbstverständlich ist es denkbar, dass die Umwandlung der XML-Dateien mittels XSLT auch von wenigstens einem der Softwareprogrammprodukte oder Tools vorgenommen und von einem dieser Produkte oder Tools auch die Visualisierung 11 bzw. die Erstellung der Dokumentation 13,15 übernommen wird. So ist es beispielsweise denkbar, dass ein Versionsverwaltungsprogramm gleichzeitig die Erstellung einer Dokumentation 15 über die erfolgten Veränderungen in einem Automatisierungsprojekt übernimmt.

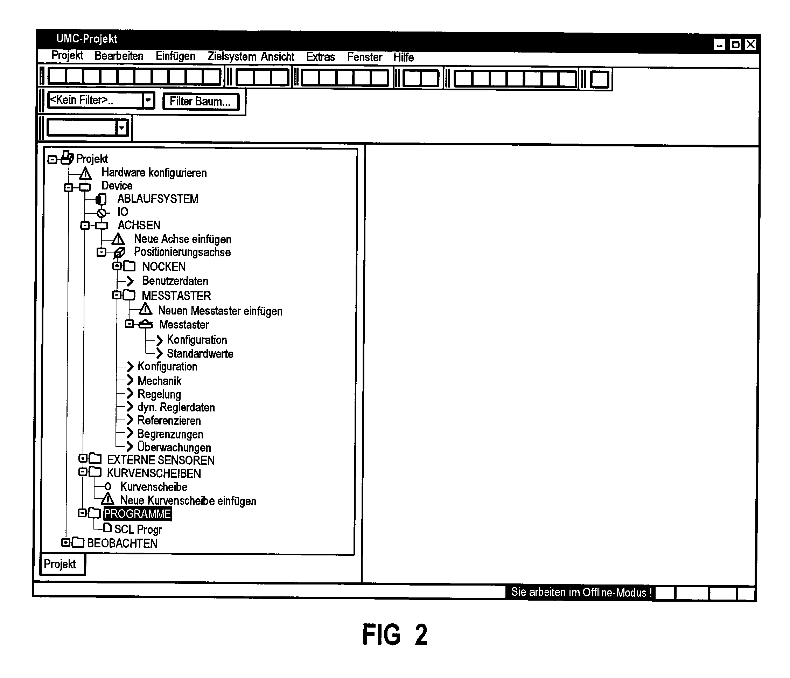

Fig. 2 zeigt eine Darstellung der Ordnerstruktur der exportierten Daten, wie sie in dem von der Anmelderin entwickelten System SIMOTION SCOUT erzeugt wird.

Ein exportierte SIMOTION SCOUT- Automatisierungsprojekt wird in einer Ordnerstruktur abgelegt. Diese Struktur ist angelehnt an den Aufbau eines Automatisierungsprojektes im SIMOTION SCOUT-Projektnavigator.

Die große Menge der Daten eines Automatisierungsprojekts wird in gegliederten Datenblöcken gespeichert. Damit wird eine übersichtliche Datenhaltung möglich gemacht, die dem Benutzer nach dem Export immer noch logisch erscheint. Ein anderer Gesichtspunkt für eine solche Hierarchie ist die Möglichkeit, Komponenten eines Automatisierungsprojektes zu analysieren oder über das Internet zu verschicken, ohne das unwichtige Daten stören.

Im nachfolgenden wird als ein mögliches Beispiel für die Hierarchie der Daten mit XML-Format die Hierarchie der Daten mit XML-Format erläutert, wie sie bei SIMOTION SCOUT erzeugt wird:
Ordner:
   MyProjectDataFolder
   Projekt.xml
   Ordner:
      Projekt
      Projekt.xml
      Alarms.xml
      Installation.xml
      ReferenceTable.xml
      S7ProjectData.xml
   Ordner:
      Device
      Device.xml
      RunTimeLevels.xml
      DeviceData.xml
      Device_Symbols.xml
      Ordner:
         ProcessingUnit
         ProcessingUnit.xml
         SCL-Programm.xml
      Ordner:
         TOCamType
         TOCamType.xml
         Kurvenscheibe.xml
      Ordner:
         TOPosAxis
         TOPosAxis.xml
         Ordner:
            Positionierungsachse
            Positionierungsachse.xml
            ExpertList.xml

In der Hierarchie werden unterschiedliche XML-Dateien angelegt. Dateien können ausschließlich Links enthalten oder ausschließlich Daten. Die Dateien, die Links enthalten, liegen in einem gleichnamigen Ordner und sind die Dateien, durch die der Einstieg in diesen Ordner ermöglicht wird. Die Links, die in den Dateien enthalten sind, verweisen auf XML-Dateien, die für die Datenhaltung zuständig sind und im gleichen Ordner liegen. Außerdem können die Links auch auf die Einstiegsdateien der Unterordner zeigen. Durch dieses Prinzip wird die Portierbarkeit vereinfacht. So ist gewährleistet, einen Ordner aus der Hierarchie nehmen zu können, ohne das die Struktur verloren geht. Somit können relevante Daten an Dritte weiter gegeben werden ohne unnütze Dateien mitzuliefern.

## Patentansprüche

1. Vorrichtung zur Bereitstellung von Projekt- und/oder Projektierungsdaten eines Automatisierungsprojekts oder einer -komponente, **gekennzeichnet durch**
eine Konvertierungseinrichtung zum Konvertieren von Projekt- und/oder Projektierungsdaten mit proprietärem Format in Daten mit einem **durch** eine standardisierte Meta-Sprache, insbesondere XML, definierten Format und zum Zurückkonvertieren von Daten mit einem **durch** eine standardisierte Meta-Sprache, insbesondere XML, definierten Format in Projekt- und/oder Projektierungsdaten mit proprietärem Format und zum Bereitstellen der Daten mit definiertem Format zur Weiterverarbeitung.

2. Vorrichtung nach Anspruch 1, **dadurch gekennzeichnet, dass** sie eine Export/Import-Einrichtung zum Export/Import von Daten aus der Vorrichtung bzw. in sie hinein enthält.

3. Vorrichtung nach einem der Ansprüche 1 oder 2, **dadurch gekennzeichnet, dass** die Konvertierungseinrichtung und die Export/Import-Einrichtung als eine Einrichtung ausgeführt ist.

4. Vorrichtung nach einem der vorangehenden Ansprüche, **gekennzeichnet durch** eine Datenablageeinrichtung zum Ablegen der Daten mit definiertem Format.

5. Engineeringsystem mit einer Vorrichtung nach einem der Ansprüche 1 bis 4.

6. Verfahren zum Bereitstellen von Projekt- und/oder Projektierungsdaten eines Automatisierungsprojekts oder einer -komponente, **dadurch gekennzeichnet, dass**, Projekt- und/oder Projektierungsdaten mit proprietärem Format in Daten mit einem durch eine standardisierte Meta-Sprache, insbesondere XML, definierten Format konvertiert und zur Weiterverarbeitung bereitgestellt werden.

7. Verfahren nach Anspruch 6, **dadurch gekennzeichnet, dass** die Daten mit definiertem Format von wenigstens einem Softwareprogrammprodukt oder Tool eingelesen und verarbeitet werden.

8. Verfahren zum Bereitstellen von Projekt- und/oder Projektierungsdaten eines Automatisierungsprojekts oder einer -komponente, **dadurch gekennzeichnet, dass**, wenigstens ein Computerprogrammprodukt oder Tool Projekt- und/oder Projektierungsdaten erzeugt oder mit seiner Hilfe erzeugt werden und diese Daten in einem durch eine standardisierte Meta-Sprache, insbesondere XML, definierten Format zur Weiterverarbeitung bereit gestellt werden.

9. Verfahren nach einem der Ansprüche 6 bis 8, **dadurch gekennzeichnet, dass**
die Daten mit definiertem Format in einer Datenablageeinrichtung abgelegt werden.

10. Verfahren nach einem der Ansprüche 7 bis 9, **dadurch gekennzeichnet, dass**
das wenigstens eine Softwareprogrammprodukt oder Tool ein Versionsverwaltungstool, ein CAD-, CAM-, CAE-Programm, ein Kurvenscheibenwerkzeug, ein Productivity Programm oder ein Projectdesign Tool ist.

11. Verfahren nach einem der Ansprüche 7 bis 10, **dadurch gekennzeichnet, dass**
Daten mit definiertem Format von dem wenigstens einen Softwareprogrammprodukt insbesondere in eine Vorrichtung nach einem der Ansprüche 1 bis 5 exportiert werden.

12. Verfahren nach Anspruch 11, **dadurch gekennzeichnet, dass**
die Daten mit definiertem Format in Projekt- und/oder Projektierungsdaten mit proprietärem Format umgewandelt werden.
